(19) Europäisches Patentamt
European Patent Office
Office européen des brevets

(11) **EP 4 471 891 A1**

(12) **EUROPEAN PATENT APPLICATION**
published in accordance with Art. 153(4) EPC

(43) Date of publication:
04.12.2024 Bulletin 2024/49

(21) Application number: 23746816.0

(22) Date of filing: 19.01.2023

(51) International Patent Classification (IPC):
H01M 4/133 *(2010.01)*    H01M 4/38 *(2006.01)*
H01M 4/48 *(2010.01)*     H01M 4/58 *(2010.01)*
H01M 4/587 *(2010.01)*    H01M 10/0566 *(2010.01)*

(52) Cooperative Patent Classification (CPC):
H01M 4/133; H01M 4/38; H01M 4/48; H01M 4/58;
H01M 4/587; H01M 10/0566; Y02E 60/10

(86) International application number:
PCT/JP2023/001528

(87) International publication number:
WO 2023/145603 (03.08.2023 Gazette 2023/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.01.2022 JP 2022011592

(71) Applicant: Panasonic Energy Co., Ltd.
Osaka 570-8511 (JP)

(72) Inventors:
• TASHITA, Takamitsu
  Kadoma-shi, Osaka 571-0057 (JP)
• KATOGI, Akihiro
  Kadoma-shi, Osaka 571-0057 (JP)
• NAKADO, Hiroki
  Kadoma-shi, Osaka 571-0057 (JP)

(74) Representative: Novagraaf International SA
Chemin de l'Echo 3
1213 Onex, Geneva (CH)

(54) **NEGATIVE ELECTRODE FOR NONAQUEOUS ELECTROLYTE SECONDARY BATTERY, AND NONAQUEOUS ELECTROLYTE SECONDARY BATTERY**

(57)    An electrode for a nonaqueous electrolyte secondary battery according to one aspect of the present disclosure is characterized by being provided with a negative electrode current collector and a negative electrode composite layer formed on the negative electrode current collector, wherein: the negative electrode composite layer includes carbon fibers and a negative electrode active substance containing graphite particles and a Si material; the graphite particles have a graphitization degree, obtained by X-ray diffraction, in the range of 70-80, and a particle internal porosity in the range of 1-5%; and the Si material content is in the range of 0.1-5.0 mass% relative to the total mass of the negative electrode active substance.

**Description**

TECHNICAL FIELD

The present disclosure relates to a negative electrode for a non-aqueous electrolyte secondary battery and a non-aqueous electrolyte secondary battery.

BACKGROUND

A carbon-based material is generally used for a negative electrode of a non-aqueous electrolyte secondary battery (for example, Patent Literatures 1 to 3), but use of a Si-based material for a negative electrode has been studied for increasing capacity of a battery. However, since the Si-based material expands and contracts by repeating charging and discharging of lithium, and thus deteriorates, there is a problem in cycle characteristics of the battery. For example, Patent Literature 4 proposes a negative electrode containing carbon nanotubes having a peak at 2,600 to 2,800 cm$^{-1}$ in a Raman spectrum obtained by Raman spectroscopic measurement, graphite, and a silicon oxide having a composition represented by $SiO_x$ (where $0 < x \leq 2$) in order to suppress deterioration of cycle characteristics of a battery.

CITATION LIST

PATENT LITERATURE

Patent Literature 1: JP H11-199322 A
Patent Literature 2: JP H08-203502 A
Patent Literature 3: JP H09-320600 A
Patent Literature 4: WO 2017-007013 A

SUMMARY

For a recent non-aqueous electrolyte secondary battery, in addition to increasing the capacity of the battery and suppressing the deterioration of the cycle characteristics, it is also desired to improve electrolyte permeability of the negative electrode that affects rapid charge and discharge performance of the battery.

Therefore, an object of the present disclosure is to provide a negative electrode for a non-aqueous electrolyte secondary battery capable of increasing capacity of a battery, suppressing deterioration of cycle characteristics of the battery, and improving electrolyte permeability of the negative electrode, and a non-aqueous electrolyte secondary battery including the negative electrode.

A negative electrode for a non-aqueous electrolyte secondary battery according to one aspect of the present disclosure includes a negative electrode current collector and a negative electrode mixture layer formed on the negative electrode current collector, in which the negative electrode mixture layer contains a negative electrode active material containing graphite particles and a Si-based material, and fibrous carbon, the graphite particles have a graphitization degree in a range of greater than or equal to 70 and less than or equal to 80 as obtained by an X-ray diffraction method and a particle internal porosity in a range of greater than or equal to 1% and less than or equal to 5%, and a content of the Si-based material is in a range of greater than or equal to 0.1 mass% and less than or equal to 5.0 mass% with respect to the total mass of the negative electrode active material.

According to the present disclosure, it is possible to provide a negative electrode for a non-aqueous electrolyte secondary battery capable of increasing capacity of a battery, suppressing deterioration of cycle characteristics of the battery, and improving electrolyte permeability of the negative electrode, and a non-aqueous electrolyte secondary battery including the negative electrode.

BRIEF DESCRIPTION OF DRAWINGS

FIG. 1 is a cross-sectional view of a non-aqueous electrolyte secondary battery as an example of an embodiment.
FIG. 2 is a cross-sectional view of a graphite particle of the present embodiment.

DESCRIPTION OF EMBODIMENTS

Hereinafter, embodiments of a non-aqueous electrolyte secondary battery according to the present disclosure will be described in detail with reference to the drawings.

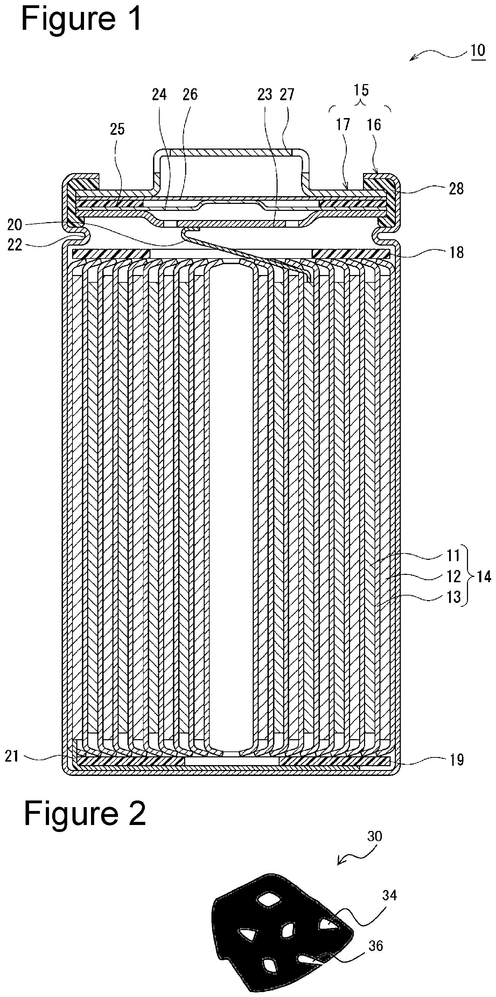

FIG. 1 is a cross-sectional view of a non-aqueous electrolyte secondary battery as an example of an embodiment. A non-aqueous electrolyte secondary battery 10 illustrated in FIG. 1 includes a winding-type electrode assembly 14 formed by winding a positive electrode 11 and a negative electrode 12 with a separator 13 interposed therebetween, a non-aqueous electrolyte, insulating plates 18 and 19 respectively disposed above and below the electrode assembly 14, and a battery case 15 housing the members described above. The battery case 15 includes a bottomed cylindrical case body 16 and a sealing assembly 17 that seals an opening of the case body 16. Examples of the battery case 15 include a metal case having a cylindrical shape, a square shape, or the like and a resin case formed by laminating resin sheets (pouch type battery).

The case body 16 is, for example, a bottomed cylindrical metal container. A gasket 28 is provided between the case body 16 and the sealing assembly 17 to ensure the sealability inside the battery. The case body 16 has a projecting portion 22 in which, for example, a part of the side part of the case body 16 protrudes inward to support the sealing assembly 17. The projecting portion 22 is preferably formed in an annular shape along the circumferential direction of the case body 16, and supports the sealing assembly 17 on its upper surface.

The sealing assembly 17 has a structure in which a filter 23, a lower vent member 24, an insulating member 25, an upper vent member 26, and a cap 27 are sequentially stacked from the electrode assembly 14 side. Each member included in the sealing assembly 17 has, for example, a disk shape or a ring shape, and the members excluding the insulating member 25 are electrically connected to each other. The lower vent member 24 and the upper vent member 26 are connected to each other at their central parts, and the insulating member 25 is interposed between the circumferential parts of the lower vent member 24 and the upper vent member 26. When the internal pressure of the non-aqueous electrolyte secondary battery 10 increases due to heat generated by an internal short circuit or the like, for example, the lower vent member 24 deforms so as to push the upper vent member 26 up toward the cap 27 side and breaks, and thus the current pathway between the lower vent member 24 and the upper vent member 26 is cut off. When the internal pressure further increases, the upper vent member 26 breaks, and gas is discharged from an opening of the cap 27.

In the non-aqueous electrolyte secondary battery 10 illustrated in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to the bottom inner surface of the case body 16 by welding or the like, and the case body 16 serves as a negative electrode terminal.

Hereinafter, the positive electrode 11, the negative electrode 12, the separator 13, and the non-aqueous electrolyte constituting the non-aqueous electrolyte secondary battery 10 will be described in detail.

[Positive Electrode]

The positive electrode 11 is a long strip-shaped sheet member, and includes a positive electrode current collector and a positive electrode mixture layer disposed on the positive electrode current collector. As the positive electrode current collector, a foil of a metal, such as aluminum or an aluminum alloy, that is stable in a potential range of the positive electrode, a film in which the metal is disposed on its surface layer, or the like can be used. The positive electrode mixture layer contains, for example, a positive electrode active material, a binder, a conductive agent, and the like. The positive electrode mixture layer is preferably formed on both surfaces of the positive electrode current collector. The positive electrode 11 can be manufactured by, for example, applying a positive electrode mixture slurry containing a positive electrode active material, a binder, a conductive agent, and the like onto the positive electrode current collector, and drying and rolling the coating film to form the positive electrode mixture layer on the positive electrode current collector.

The positive electrode active material is, for example, a lithium composite oxide capable of reversibly inserting and releasing lithium. Examples of the metal element included in the lithium composite oxide include Ni, Co, Mn, Al, B, Mg, Ti, V, Cr, Fe, Cu, Zn, Ga, Sr, Zr, Nb, In, Sn, Ta, and W. Among them, it is preferable to include at least one of Ni, Co, and Mn. A suitable example of the lithium composite oxide is a composite oxide represented by a general formula $LiMO_2$ (where M is Ni and X, X is a metal element other than Ni, and the ratio of Ni is greater than or equal to 50 mol% and less than or equal to 95 mol% based on the total number of moles of the metal element excluding Li). Examples of X in the above formula include Co, Mn, Al, B, Mg, Ti, V, Cr, Fe, Cu, Zn, Ga, Sr, Zr, Nb, In, Sn, Ta, and W.

Examples of the conductive agent contained in the positive electrode mixture layer include fibrous carbon such as carbon black, acetylene black, Ketjenblack, graphene, or carbon nanotubes, and a carbon material such as graphite.

Examples of the binder contained in the positive electrode mixture layer include a fluororesin such as polytetrafluoroethylene (PTFE) or polyvinylidene fluoride (PVdF), polyacrylonitrile (PAN), a polyimide-based resin, an acrylic resin, a polyolefin-based resin, styrenebutadiene rubber (SBR), carboxymethyl cellulose (CMC) or a salt thereof, polyacrylic acid (PAA) or a salt thereof (PAA-Na, PAA-K, or the like, or a partially neutralized salt may be used), polyethylene oxide (PEO), and polyvinyl alcohol (PVA).

[Negative Electrode]

The negative electrode 12 is a long strip-shaped sheet member, and includes a negative electrode current collector and a negative electrode mixture layer disposed on the negative electrode current collector. As the negative electrode current collector, for example, a foil of a metal, such as copper or a copper alloy, that is stable in a potential range of the negative electrode, a film in which the metal is disposed on its surface layer, or the like can be used.

The negative electrode mixture layer contains a negative electrode active material containing graphite particles and a Si-based material, and fibrous carbon. The negative electrode mixture layer 32 may further contain a binder and the like.

The negative electrode 12 can be manufactured by, for example, applying a negative electrode mixture slurry containing a negative electrode active material, fibrous carbon, a binder, and the like onto the negative electrode current collector, and drying and rolling the coating film to form the negative electrode mixture layer on the negative electrode current collector.

The graphite particles have a graphitization degree in a range of greater than or equal to 70 and less than or equal to 80 and preferably greater than or equal to 72 and less than or equal to 78 as obtained by an X-ray diffraction method. In a case where the graphitization degree of the graphite particles is in the above range, the graphite particles are hard particles as compared with graphite particles higher than the above range. Since the hard graphite particles are hardly crushed even by rolling at the time of manufacturing the negative electrode 12, it is considered that appropriate voids are maintained in the negative electrode mixture layer, which contributes to improvement of electrolyte permeability. Note that when the graphitization degree of the graphite particles is lower than the above range, a side reaction with the non-aqueous electrolyte is promoted, and the cycle characteristics of the battery tend to deteriorate.

Here, in the X-ray diffraction method, CuK$\alpha$ is used as an X-ray source, high-purity silicon is used as a standard substance, and a diffraction pattern is measured for the graphite particles. Then, an interplanar spacing d002 (Å) of a (002) plane of the graphite particle is determined from a peak position and a half width of a diffraction pattern of the (002) plane of the graphite particle, and a value of d002 is applied to the following equation to calculate a graphitization degree P.

$$\text{Graphitization degree P} = 100 \times (3.44 - d002/3.44 - 3.354)$$

FIG. 2 is a cross-sectional view of a graphite particle of the present embodiment. As illustrated in FIG. 2, a graphite particle 30 of the present embodiment has a closed pore 34 (hereinafter, an internal pore 34) that is not connected to a particle surface from the inside of the particle and a pore 36 (hereinafter, an external pore 36) that is connected to the particle surface from the inside of the particle in a cross-sectional view of the graphite particle 30.

The graphite particles 30 of the present embodiment have a particle internal porosity in a range of greater than or equal to 1% and less than or equal to 5%. The particle internal porosity of the graphite particles 30 is in a range of greater than or equal to 1% and less than or equal to 5% and preferably a range of greater than or equal to 2% and less than or equal to 5%. It is considered that, when the particle internal porosity of the graphite particles is set to be within the above range, an appropriate pore is maintained in the negative electrode mixture layer as compared with the case outside the above range, which contributes to improvement of electrolyte permeability. Here, the particle internal porosity of the graphite particles is a two-dimensional value determined from a ratio of an area of the internal pores of the graphite particles to a cross-sectional area of the graphite particles in the negative electrode mixture layer. The particle internal porosity of the graphite particles is determined by the following procedure.

<Method of Measuring Internal Porosity>

(1) A cross section of a negative electrode active material layer is exposed. Examples of a method of exposing the cross section include a method of exposing the cross section of the negative electrode active material layer by cutting a part of the negative electrode and machining the cut part with an ion milling apparatus (for example, IM4000PLUS manufactured by Hitachi High-Tech Corporation).
(2) Using a scanning electron microscope, a reflected electron image of the above exposed cross section of the negative electrode active material layer is captured. A magnification when the backscattered electron image is captured is 3,000 times to 5,000 times.

(3) A cross-sectional image acquired by the above-described process is read into a computer, a binarization process is applied using an image analyzing software (for example, ImageJ manufactured by National Institutes of Health), and a binarized image is acquired in which a particle cross section in the cross-sectional image is converted into black color and pores existing in the particle cross section are converted into white color.

(4) Graphite particles having a particle diameter of greater than or equal to 5 μm and less than or equal to 50 μm are selected from the binarized image, and the area of the graphite particle cross section and the area of the internal pores existing in the graphite particle cross section are calculated. Here, the area of the graphite particle cross section refers to an area of a region surrounded by an outer periphery of the graphite particle, that is, an area of all of the cross-sectional portions of the graphite particles. In addition, among the pores existing in the graphite particle cross section, for pores having a width of less than or equal to 3 μm, it may be difficult to judge whether the pore is the internal pore or the external pore in the image analysis, and thus, the pores having the width of less than or equal to 3 μm may be determined as internal pores Based on the calculated area of the graphite particle cross section and the calculated area of the internal pores of the graphite particle cross section, the particle internal porosity of the graphite particles is calculated (area of internal pores of the graphite particle cross section × 100/area of graphite particle cross section). The particle internal porosity of the graphite particles is an average value of 10 graphite particles.

An example of a method for producing graphite particles of the present embodiment will be described. For example, coke (precursor) which is a primary raw material is pulverized to a predetermined size, and in a state in which the coke is aggregated with a binder, the aggregate is baked at a predetermined baking temperature for a predetermined baking time for graphitization, and then the resulting product is sieved to obtain graphite particles of a desired size. Here, the particle internal porosity can be adjusted to a range of greater than or equal to 1% and less than or equal to 5% by a particle diameter of the precursor after the pulverization, a particle diameter of the precursor in the aggregated state, or the like. For example, an average particle diameter (volume-based median diameter D50) of the precursor after pulverization is preferably in a range of greater than or equal to 12 μm and less than or equal to 20 μm. In addition, a graphitization degree of the graphite particles can be controlled, for example, by adjusting the baking temperature and the baking time. The baking temperature may be, for example, in a range of higher than or equal to 2,600°C and lower than or equal to 2,900°C. The baking time may be, for example, longer than or equal to 10 hours.

The graphite particles of the present embodiment are not particularly limited to natural graphite, artificial graphite, and the like, and artificial graphite is preferable because it is easy to adjust the graphitization degree and the particle internal porosity. A content of the graphite particles may be, for example, greater than or equal to 90 mass% or greater than or equal to 95 mass% with respect to the total mass of the negative electrode active material.

Examples of the Si-based material as the negative electrode active material include Si particles, alloy particles containing Si, and composite particles containing Si. These Si-based materials may be used alone or in combination of two or more thereof.

The Si particles can be obtained, for example, by a gas phase method or by pulverizing silicon chips, and may be produced by any method. Examples of the alloy particles containing Si include alloys containing Si and a metal selected from alkali metals, alkaline earth metals, transition metals, rare earth metals, and combinations thereof. The composite particles containing Si include, for example, a lithium ion conductive phase and Si particles dispersed in the lithium ion conductive phase. The lithium ion conductive phase is, for example, at least one selected from a silicon oxide phase, a silicate phase, and a carbon phase.

The silicate phase preferably includes, for example, at least one element selected from lithium, sodium, potassium, rubidium, cesium, francium, beryllium, magnesium, calcium, strontium, barium, and radium from the viewpoints of high lithium ion conductivity and the like. Among the silicate phases, a silicate phase including lithium (hereinafter, may be referred to as a lithium silicate phase) is preferable from the viewpoints of high lithium ion conductivity and the like.

The lithium silicate phase is represented by, for example, the formula: $Li_{2z}SiO_{2+z}$ ($0 < z < 2$). From the viewpoints of stability, ease of production, lithium ion conductivity, and the like, z preferably satisfies the relation of $0 < z < 1$, and more preferably $z = 1/2$.

The composite particles in which Si particles are dispersed in a silicon oxide phase is represented by, for example, a general formula $SiO_x$ (wherein x is preferably in the range of $0 < x < 2$, and more preferably in the range of $0.5 \leq x \leq 1.6$). The composite particles in which Si particles are dispersed in a carbon phase is represented by, for example, a general formula $Si_xC_y$ (in which ranges of $0 < x \leq 1$ and $0 < y \leq 1$ are preferable).

The Si-based material preferably has a particle surface on which a conductive film including a material having high conductivity is formed. Examples of the conductive film include carbon films, metal films, and metal compound films, and a carbon film is preferable from the viewpoints of electrochemical stability and the like. The carbon film can be formed with, for example, a CVD method in which acetylene, methane, or the like is used, a method in which coal pitch, petroleum pitch, a phenol resin, or the like is mixed with a silicon-based active material and the mixture is heat-treated, or the like. The conductive film may also be formed by fixing a conductive filler such as carbon black to the particle surface of the Si-based material using a binder.

A content of the Si-based material is in a range of greater than or equal to 0.1 mass% and less than or equal to 5.0 mass%, and preferably in a range of greater than or equal to 1.0 mass% and less than or equal to 5.0 mass%, with respect to the total mass of the negative electrode active material. In a case where the content of the Si-based material is in the above range, deterioration of the cycle characteristics of the battery is suppressed as compared with the case where the content exceeds the above range, and the capacity of the battery can be increased as compared with the case where the content is less than the above range.

Examples of the fibrous carbon contained in the negative electrode mixture layer include known materials used as a conductive agent of a battery, and examples thereof include carbon nanotubes (CNTs), carbon nanofibers (CNFs), vapor grown carbon fibers (VGCFs), electrospun carbon fibers, polyacrylonitrile (PAN)-based carbon fibers, and pitch-based carbon fibers. When the positive electrode mixture layer contains fibrous carbon, for example, disconnection of the conductive path between the graphite particles and the Si-based material associated with charging and discharging of the battery is suppressed as compared with the case where the positive electrode mixture layer does not contain fibrous carbon, and thus it is considered that deterioration of the cycle characteristics of the battery is suppressed.

The outermost peripheral diameter of the fibrous carbon is, for example, in a range of greater than or equal to 1 nm and less than or equal to 20 nm. The outermost peripheral diameter of the fibrous carbon can be determined by measuring outer diameters of 50 arbitrary fibrous carbons with a field emission scanning microscope (FE-SEM) or a transmission electron microscope (TEM) and arithmetically averaging the outer diameters.

A fiber length of the fibrous carbon is, for example, in a range of greater than or equal to 0.1 $\mu$m and less than or equal to 20 $\mu$m. The fiber length of the fibrous carbon can be determined by measuring lengths of 50 arbitrary fibrous carbons with a field emission scanning microscope (FE-SEM) and arithmetically averaging the lengths.

The fibrous carbon preferably contains carbon nanotubes, for example, from the viewpoint of suppressing deterioration of the cycle characteristics of the battery. Examples of the carbon nanotubes include single-walled carbon nanotubes, double-walled carbon nanotubes, and multi-walled carbon nanotubes. The single-walled carbon nanotube (SWCNT) is a carbon nanostructure in which one layer of graphene sheets forms one cylindrical shape, the double-walled carbon nanotube is a carbon nanostructure in which two layers of graphene sheets are concentrically laminated to form one cylindrical shape, and the multi-walled carbon nanotube is a carbon nanostructure in which three or more layers of graphene sheets are concentrically laminated to form one cylindrical shape. The graphene sheet refers to a layer in which a carbon atom in an sp2 hybrid orbital forming a crystal of graphite is located at an apex of a regular hexagon. The shape of the carbon nanotube is not limited, and examples thereof include shapes such as a needle shape, a cylindrical tube shape, a fishbone shape (fishbone or cup-stacked type), a trump shape (platelet), and a coil shape.

A G/D ratio obtained by Raman spectroscopic measurement of the carbon nanotubes (CNTs) is preferably greater than or equal to 40 and less than or equal to 130. By setting the G/D ratio of the carbon nanotubes to be within the above range, deterioration of the cycle characteristics of the battery may be further suppressed as compared with the case outside the above range.

The G/D ratio is a ratio of a peak intensity of a G-Band (greater than or equal to 1,550 cm$^{-1}$ and less than or equal to 1,600 cm$^{-1}$) to a peak intensity of a D-Band (greater than or equal to 1,300 cm$^{-1}$ and less than or equal to 1,350 cm$^{-1}$) in a Raman spectroscopic spectrum. Note that it is indicated that CNTs having a high G/D ratio have high crystallinity.

The Raman spectroscopic spectrum of the carbon nanotubes can be measured using a Raman spectrometer (for example, NRS-5500 manufactured by JASCO Corporation). For example, a sample prepared by fractionating carbon nanotubes on a slide and flattening the carbon nanotubes using a spatula is measured. The measurement conditions are, for example, as follows.

Measurement time: 5 seconds
Number of integration times: 2
Dimming filter OD: 0.3
Objective lens magnification: 100 times
Measurement range: greater than or equal to 950 cm$^{-1}$ and less than or equal to 1,900 cm$^{-1}$

A content of the fibrous carbon is preferably greater than or equal to 0.01 mass% and less than or equal to 0.1 mass%, and more preferably greater than or equal to 0.01 mass% and less than or equal to 0.05 mass%, with respect to the total mass of the negative electrode active material from the viewpoint of, for example, increasing the capacity of the battery, suppressing the deterioration of cycle characteristics, and the like.

The negative electrode mixture layer may contain a conductive agent other than fibrous carbon in addition to the fibrous carbon. Examples of the conductive agent other than fibrous carbon include carbon black, acetylene black, and Ketjenblack.

Examples of the binder include the binders exemplified for the positive electrode 11. A content of the binder is, for example, greater than or equal to 0.5 mass% and less than or equal to 10 mass% with respect to the total mass of the negative electrode active material.

[Separator]

For example, a porous sheet having an ion permeation property and an insulation property is used for the separator 13. Specific examples of the porous sheet include fine porous thin films, woven fabrics, and nonwoven fabrics. As the material of the separator 13, olefin-based resins such as polyethylene, polypropylene, and copolymers containing at least one of ethylene or propylene, cellulose, and the like are suitable. The separator 13 may have a single-layered structure or a multilayered structure. On the surface of the separator 13, a heat-resistant layer or the like may be formed.

[Non-Aqueous Electrolyte]

The non-aqueous electrolyte contains a non-aqueous solvent and an electrolyte salt. As the electrolyte salt, for example, a lithium salt such as LiFSI, LiTFSI, $LiBF_4$, or $LiPF_6$ is used. As the solvent, for example, an ester such as ethylene carbonate (EC), propylene carbonate (PC), dimethyl carbonate (DMC), ethyl methyl carbonate (EMC), diethyl carbonate (DEC), methyl acetate (MA), or methyl propionate (MP), an ether, a nitrile, an amide, or a mixed solvent of two or more thereof is used. The non-aqueous solvent may contain a halogen-substituted product in which at least a part of hydrogen in a solvent described above is substituted with a halogen atom such as fluorine.

Examples of the halogen-substituted product include fluorinated cyclic carbonic acid esters such as fluoroethylene carbonate (FEC), fluorinated chain carbonic acid esters, and fluorinated chain carboxylic acid esters such as methyl fluoropropionate (FMP).

EXAMPLES

Hereinafter, the present disclosure will be further described with reference to Examples. However, the present disclosure is not limited to these Examples.

<Example 1>

[Manufacture of Positive Electrode]

95 parts by mass of $LiCo_{0.979}Zr_{0.001}Mg_{0.01}Al_{0.01}O_2$, 2.5 parts by mass of acetylene black (AB), and 2.5 parts by mass of polyvinylidene fluoride were mixed, and an appropriate amount of N-methyl-2-pyrrolidone (NMP) was added, thereby preparing a positive electrode mixture slurry. Next, the positive electrode mixture slurry was applied onto both surfaces of a positive electrode current collector formed of an aluminum foil having a thickness of 15 $\mu$m, and the coating film was dried. After rolling the dried coating film using a rolling roller, the coating film was cut into a predetermined electrode plate size to manufacture a positive electrode in which a positive electrode mixture layer was formed on both surfaces of a positive electrode current collector.

[Production of Graphite Particles]

Coke was pulverized until an average particle diameter (median diameter D50) reached 12 $\mu$m. Pitch as a binder was added to the pulverized coke, and the coke was aggregated until the average particle diameter (median diameter D50) reached 17 $\mu$m. The aggregate was baked at a temperature of 2,800°C for a predetermined time to be graphitized, and then sieved using a 250 mesh sieve to obtain graphite particles having an average particle diameter (median diameter D50) of 23 $\mu$m. As a result of measuring a graphitization degree of the graphite particles, the graphitization degree was 75. A method for calculating the graphitization degree is as described above.

[Manufacture of Negative Electrode]

A negative electrode active material was prepared by mixing 97 parts by mass of the above graphite particles with 3 parts by mass of a Si-based material (composition: SiO). The negative electrode active material, carboxymethyl cellulose, styrene butadiene rubber, and carbon nanotubes (CNTs) were mixed at a mass ratio of 100:1.0:1.0:0.02. An appropriate amount of water was added to and mixed with the mixture to prepare a negative electrode mixture slurry. The negative electrode mixture slurry was applied onto both surfaces of a negative electrode current collector formed of a copper foil having a thickness of 10 $\mu$m, and the coating film was dried. After rolling the dried coating film using a rolling roller, the coating film was cut into a predetermined electrode plate size to manufacture a negative electrode in which a negative electrode mixture layer was formed on both surfaces of a negative electrode current collector.

As a result of measuring a particle internal porosity of graphite particles from the manufactured negative electrode, the particle internal porosity was 3%. A method for measuring the particle internal porosity is as described above.

[Preparation of Non-Aqueous Electrolyte]

Ethylene carbonate (EC), propylene carbonate (PC), and ethyl methyl carbonate (EMC) were mixed at a volume ratio of 10:10:80. $LiPF_6$ was dissolved in the mixed solvent so as to have a concentration of 1.0 mol/L to prepare a non-aqueous electrolyte.

[Manufacture of Non-Aqueous Electrolyte Secondary Battery]

A separator formed of a polyethylene microporous film was disposed between the positive electrode and the negative electrode, the separator, the positive electrode, and the negative electrode were wound, and a tape was attached to the outermost peripheral surface, thereby producing a cylindrical winding-type electrode assembly. The electrode assembly was pressed to obtain a flat electrode assembly.

A sheet-like laminate material having a five-layer structure of resin layer (polypropylene)/adhesive layer/aluminum alloy layer/adhesive layer/resin layer (polypropylene) was prepared. The laminate material was folded back to form a bottom portion, thereby producing an exterior body in which a cup-shaped electrode assembly housing space was formed. Then, in a glove box under an argon atmosphere, the above electrode assembly and the above non-aqueous electrolyte were housed in the electrode assembly housing space in the exterior body. The inside of the exterior body was depressurized to impregnate the separator with the non-aqueous electrolyte, and then an opening of the exterior body was sealed to manufacture a non-aqueous electrolyte secondary battery.

<Example 2>

Graphite particles were produced in the same manner as that of Example 1, except that in the production of the graphite particles, the baking time when the aggregate was baked and graphitized at a temperature of 2,800°C was shorter than that in Example 1. As a result of measuring a graphitization degree of the graphite particles of Example 2, the graphitization degree was 72. A negative electrode was manufactured in the same manner as that of Example 1, except that the above graphite particles were used, and a non-aqueous electrolyte secondary battery was manufactured in the same manner as that of Example 1 using the negative electrode. As a result of measuring a particle internal porosity of the graphite particles from the negative electrode of Example 2, the particle internal porosity was 3%.

<Example 3>

A non-aqueous electrolyte secondary battery was manufactured in the same manner as that of Example 1, except that a negative electrode active material in which 99 parts by mass of graphite particles and 1 part by mass of a Si-based material (composition: SiO) were mixed was prepared in the manufacture of the negative electrode.

<Example 4>

A non-aqueous electrolyte secondary battery was manufactured in the same manner as that of Example 1, except that a negative electrode active material in which 96 parts by mass of graphite particles and 4 parts by mass of a Si-based material (composition: SiO) were mixed was prepared in the manufacture of the negative electrode.

<Comparative Example 1>

Graphite particles were produced in the same manner as that of Example 1, except that in the production of the graphite particles, the aggregate was baked at a temperature of 3,000°C. As a result of measuring a graphitization degree of the graphite particles of Comparative Example 1, the graphitization degree was 85.

A negative electrode was manufactured in the same manner as that of Example 1, except that only the graphite particles of Comparative Example 1 were used as a negative electrode active material, a Si-based material was not used, and carbon nanotubes (CNTs) were not added in the manufacture of the negative electrode, and a non-aqueous electrolyte secondary battery was manufactured in the same manner as that of Example 1 using the negative electrode.

<Comparative Example 2>

[Production of Graphite Particles]

Coke was pulverized until an average particle diameter (median diameter D50) reached 15 μm, pitch as a binder was added to the pulverized coke for agglomeration, and then a block-shaped molded body having a density of greater than or equal to 1.6 g/cm$^3$ and less than or equal to 1.9 g/cm$^3$ was produced at an isotropic pressure. The block-shaped molded body was baked at a temperature of 3,000°C for a predetermined time to be graphitized. Next, the graphitized block-shaped molded body was pulverized and sieved using a 250 mesh sieve to obtain graphite particles having an average particle diameter (median diameter D50) of 23 μm. As a result of measuring a graphitization degree of the graphite particles, the graphitization degree was 85.

A negative electrode was manufactured in the same manner as that of Example 1, except that only the graphite particles of Comparative Example 2 were used as a negative electrode active material, a Si-based material was not used, and carbon nanotubes (CNTs) were not added in the manufacture of the negative electrode, and a non-aqueous electrolyte secondary battery was manufactured in the same manner as that of Example 1 using the negative electrode. As a result of measuring a particle internal porosity of the graphite particles from the negative electrode of Comparative Example 2, the particle internal porosity was 10%.

<Comparative Example 3>

A negative electrode was manufactured in the same manner as that of Example 1, except that the graphite particles of Comparative Example 1 were used and carbon nanotubes (CNTs) were not added in the manufacture of the negative electrode, and a non-aqueous electrolyte secondary battery was manufactured in the same manner as that of Example 1 using the negative electrode.

<Comparative Example 4>

A negative electrode was manufactured in the same manner as that of Example 1, except that the graphite particles of Comparative Example 1 were used in the manufacture of the negative electrode, and a non-aqueous electrolyte secondary battery was manufactured in the same manner as that of Example 1 using the negative electrode.

<Comparative Example 5>

A negative electrode was manufactured in the same manner as that of Example 1, except that carbon nanotubes (CNTs) were not added in the manufacture of the negative electrode, and a non-aqueous electrolyte secondary battery was manufactured in the same manner as that of Example 1 using the negative electrode.

<Comparative Example 6>

A negative electrode was manufactured in the same manner as that of Example 1, except that the graphite particles of Example 2 were used and carbon nanotubes (CNTs) were not added in the manufacture of the negative electrode, and a non-aqueous electrolyte secondary battery was manufactured in the same manner as that of Example 1 using the negative electrode.

<Comparative Example 7>

A negative electrode was manufactured in the same manner as that of Example 1, except that a Si-based material as a negative electrode active material was not used and carbon nanotubes (CNTs) were not added in the manufacture of the negative electrode, and a non-aqueous electrolyte secondary battery was manufactured in the same manner as that of Example 1 using the negative electrode.

<Comparative Example 8>

Graphite particles were produced in the same manner as that of Comparative Example 2, except that in the production of the graphite particles, the aggregate was baked at a temperature of 2,800°C. As a result of measuring a graphitization degree of the graphite particles of Comparative Example 8, the graphitization degree was 75. A negative electrode was manufactured in the same manner as that of Example 1, except that the graphite particles of Comparative Example 8 were used in the manufacture of the negative electrode, and a non-aqueous electrolyte secondary battery was manufactured in the same manner as that of Example 1 using the negative electrode. As a result of measuring a particle internal porosity of the graphite particles from the negative electrode of Comparative Example 8, the particle internal porosity was 10%.

<Comparative Example 9>

A non-aqueous electrolyte secondary battery was manufactured in the same manner as that of Example 1, except that a negative electrode active material in which 94 parts by mass of graphite particles and 6 parts by mass of a Si-based material (composition: SiO) were mixed was prepared in the manufacture of the negative electrode.

[Electrolyte Permeability Test of Negative Electrode]

After 3 μL of polyethylene carbonate was dropped on the surface of the negative electrode mixture layer of each of Examples and each of Comparative Examples, the time (electrolyte permeation time) until the droplets of polyethylene carbonate permeated into the negative electrode mixture layer and disappeared from the surface of the negative electrode mixture layer was measured. The shorter the electrolyte permeation time, the higher the electrolyte permeability.

[Measurement of Battery Capacity]

The non-aqueous electrolyte secondary battery of each of Examples and each of Comparative Examples was subjected to constant current charge (a current 1 It = 800 mA and an end voltage of 4.2 V) and then subjected to constant voltage charge (a voltage of 4.2 V and an end current of 40 mA) in a temperature environment of 25°C. Thereafter, the battery was subjected to constant current discharge at 800 mA to an end voltage of 2.75 V The discharge capacity at this time was measured as a battery capacity.

[Charge and Discharge Cycle Test]

The test cell of each of Examples and each of Comparative Examples was subjected to constant current charge (a current 1 It = 800 mA and an end voltage of 4.2 V) and then subjected to constant voltage charge (a voltage of 4.2 V and an end current of 40 mA) in a temperature environment of 25°C. Thereafter, the battery was subjected to constant current discharge at 800 mA to an end voltage of 2.75 V The charge and discharge was defined as one cycle, and 300 cycles were performed. A capacity retention rate during a charge and discharge cycle of the test cell of each of Examples and each of Comparative Examples was calculated using the following equation. Note that as the capacity retention rate is higher, deterioration of the cycle characteristics is more suppressed.

Capacity retention rate (%) = (discharge capacity at 300th cycle/discharge capacity at 1st cycle) $\times$ 100

Table 1 summarizes the test results for each of Examples and each of Comparative Examples. However, regarding the battery capacity and the electrolyte permeation time, the results of Comparative Example 1 are used as a reference (100), and the results of other Examples and Comparative Examples are shown as relative values.

[Table 1]

| | Graphite particles | | Si-based material | CNT | Battery capacity | Capacity retention rate (%) | Electrolyte permeation time |
|---|---|---|---|---|---|---|---|
| | Graphitization degree | Particle internal porosity (%) | Content (mass%) | Content (mass%) | | | |
| Comparative Example 1 | 85 | 3 | 0.0 | 0.00 | 100 | 92 | 100 |
| Comparative Example 2 | 85 | 10 | 0.0 | 0.00 | 100 | 92 | 110 |
| Comparative Example 3 | 85 | 3 | 3.0 | 0.00 | 105 | 75 | 101 |
| Comparative Example 4 | 85 | 3 | 3.0 | 0.02 | 104 | 92 | 101 |

(continued)

| | Graphite particles | | Si-based material | CNT | Battery capacity | Capacity retention rate (%) | Electrolyte permeation time |
|---|---|---|---|---|---|---|---|
| | Graphitization degree | Particle internal porosity (%) | Content (mass%) | Content (mass%) | | | |
| Comparative Example 5 | 75 | 3 | 3.0 | 0.00 | 102 | 68 | 80 |
| Comparative Example 6 | 72 | 3 | 3.0 | 0.00 | 101 | 62 | 75 |
| Comparative Example 7 | 75 | 3 | 0.0 | 0.00 | 96 | 97 | 80 |
| Comparative Example 8 | 75 | 10 | 3.0 | 0.02 | 101 | 92 | 105 |
| Comparative Example 9 | 75 | 3 | 6.0 | 0.02 | 108 | 85 | 80 |
| Example 1 | 75 | 3 | 3.0 | 0.02 | 103 | 92 | 80 |
| Example 2 | 72 | 3 | 3.0 | 0.02 | 102 | 91 | 75 |
| Example 3 | 75 | 3 | 1.0 | 0.02 | 101 | 96 | 80 |
| Example 4 | 75 | 3 | 4.0 | 0.02 | 105 | 90 | 80 |

In Examples 1 to 4 in which a negative electrode active material containing graphite particles and a Si-based material, and fibrous carbon were contained in the negative electrode mixture layer, a graphitization degree of the graphite particles was in a range of greater than or equal to 70 and less than or equal to 80, a particle internal porosity of the graphite particles was in a range of greater than or equal to 1% and less than or equal to 5%, and a content of the Si-based material was in a range of greater than or equal to 0.1 mass% and less than or equal to 5.0 mass% with respect to the total mass of the negative electrode active material, the battery capacity was higher than that of Comparative Example 1, the cycle characteristic deterioration suppression effect equivalent to or higher than that of Comparative Example 1 was exhibited, and the electrolyte permeability of the negative electrode was improved than that of Comparative Example 1.

REFERENCE SIGNS LIST

10    Non-aqueous electrolyte secondary battery
11    Positive electrode
12    Negative electrode
13    Separator
14    Electrode assembly
15    Battery case
16    Case body
17    Sealing assembly
18, 19    Insulating plate
20    Positive electrode lead
21    Negative electrode lead
22    Projecting portion
23    Filter
24    Lower vent member
25    Insulating member
26    Upper vent member
27    Cap
28    Gasket
30    Graphite particle

34      Internal pore

36      External pore

**Claims**

1. A negative electrode for a non-aqueous electrolyte secondary battery, comprising a negative electrode current collector; and a negative electrode mixture layer formed on the negative electrode current collector,

   wherein the negative electrode mixture layer contains a negative electrode active material containing graphite particles and a Si-based material, and fibrous carbon,
   the graphite particles have a graphitization degree in a range of greater than or equal to 70 and less than or equal to 80 as obtained by an X-ray diffraction method and a particle internal porosity in a range of greater than or equal to 1% and less than or equal to 5%, and
   a content of the Si-based material is in a range of greater than or equal to 0.1 mass% and less than or equal to 5.0 mass% with respect to the total mass of the negative electrode active material.

2. The negative electrode for a non-aqueous electrolyte secondary battery according to claim 1, wherein the fibrous carbon includes carbon nanotubes.

3. The negative electrode for a non-aqueous electrolyte secondary battery according to claim 1 or 2, wherein a content of the fibrous carbon is in a range of greater than or equal to 0.01 mass% and less than or equal to 0.10 mass% with respect to the total mass of the negative electrode active material.

4. The negative electrode for a non-aqueous electrolyte secondary battery according to claim 2, wherein the carbon nanotubes have a G/D ratio in a range of greater than or equal to 40 and less than or equal to 130 as obtained by Raman spectroscopic measurement.

5. A non-aqueous electrolyte secondary battery comprising a positive electrode, a negative electrode, and a non-aqueous electrolyte,
   wherein the negative electrode is the negative electrode for a non-aqueous electrolyte secondary battery according to any one of claims 1 to 4.

# Figure 1

# Figure 2

## INTERNATIONAL SEARCH REPORT

| International application No. |
| --- |
| **PCT/JP2023/001528** |

| A. | CLASSIFICATION OF SUBJECT MATTER |
| --- | --- |

*H01M 4/133*(2010.01)i; *H01M 4/38*(2006.01)i; *H01M 4/48*(2010.01)i; *H01M 4/58*(2010.01)i; *H01M 4/587*(2010.01)i; *H01M 10/0566*(2010.01)i

FI: H01M4/133; H01M4/38 Z; H01M4/48; H01M4/58; H01M4/587; H01M10/0566

According to International Patent Classification (IPC) or to both national classification and IPC

| B. | FIELDS SEARCHED |
| --- | --- |

Minimum documentation searched (classification system followed by classification symbols)

H01M4/133; H01M4/38; H01M4/48; H01M4/58; H01M4/587; H01M10/0566

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2015/105167 A1 (SHOWA DENKO K.K.) 16 July 2015 (2015-07-16) | 1-5 |
| A | JP 2015-185445 A (MITSUBISHI CHEMICAL CORP.) 22 October 2015 (2015-10-22) | 1-5 |
| A | WO 2015/115242 A1 (NITTO DENKO CORP.) 06 August 2015 (2015-08-06) | 1-5 |
| A | JP 2016-181405 A (KUREHA CORP.) 13 October 2016 (2016-10-13) | 1-5 |
| A | WO 2014/143213 A1 (ENERG2 TECHNOLOGIES, INC.) 18 September 2014 (2014-09-18) | 1-5 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 March 2023** | **20 March 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
**Information on patent family members**

International application No.

**PCT/JP2023/001528**

| Patent document cited in search report | | | Publication date (day/month/year) | Patent family member(s) | | | Publication date (day/month/year) |
|---|---|---|---|---|---|---|---|
| WO | 2015/105167 | A1 | 16 July 2015 | EP | 3093910 | A1 | |
| | | | | KR | 10-2016-0081969 | A | |
| | | | | CN | 105900269 | A | |
| | | | | TW | 201532336 | A | |
| JP | 2015-185445 | A | 22 October 2015 | (Family: none) | | | |
| WO | 2015/115242 | A1 | 06 August 2015 | JP | 2015-144072 | A | |
| JP | 2016-181405 | A | 13 October 2016 | (Family: none) | | | |
| WO | 2014/143213 | A1 | 18 September 2014 | US | 2014/0272592 | A1 | |
| | | | | US | 2017/0346084 | A1 | |
| | | | | US | 2019/0267622 | A1 | |
| | | | | US | 2021/0126251 | A1 | |
| | | | | US | 2016/0344030 | A1 | |
| | | | | US | 2020/0280070 | A1 | |
| | | | | WO | 2014/201275 | A2 | |
| | | | | CN | 105190948 | A | |
| | | | | CN | 110112377 | A | |
| | | | | CN | 105453305 | A | |
| | | | | CN | 110289418 | A | |

Form PCT/ISA/210 (patent family annex) (January 2015)

**REFERENCES CITED IN THE DESCRIPTION**

**Patent documents cited in the description**

- JP H11199322 A
- JP H08203502 A
- JP H09320600 A
- WO 2017007013 A